# EUROPEAN PATENT SPECIFICATION

(11) **EP 2 042 415 B1**
(45) Date of publication and mention of the grant of the patent: **06.10.2010**
(21) Application number: 08012785.5
(22) Date of filing: 15.07.2008
(51) Int. Cl.: B62J 17/02

(54) **Motorcycle having a cowl structure**
Motorrad mit einer Verkleidungsstruktur
Motocyclette comportant une structure de capot

(30) Priority: 28.09.2007 JP 2007256713; 28.09.2007 JP 2007256712; 28.09.2007 JP 2007256679
(43) Date of publication of application: 01.04.2009
(73) Proprietor: Honda Motor Co., Ltd., Minato-ku Tokyo 107-8556 (JP)
(72) Inventor: Kodama, Makoto c/o Honda R&D Co., Ltd., Wako-shi, Saitama, 351-0193 (JP); Nishimoto, Akihiko c/o Honda R&D Co., Ltd., Wako-shi, Saitama, 351-0193 (JP); Ota, Yutaka c/o Honda R&D Co., Ltd., Wako-shi, Saitama, 351-0193 (JP); Isomura, Mamoru c/o Honda R&D Co., Ltd., Wako-shi, Saitama, 351-0193 (JP); Tanaka, Kenji c/o Honda R&D Co., Ltd., Wako-shi, Saitama, 351-0193 (JP)
(74) Representative: Liska, Horst

(56) References cited:
- JP-A- 60 183 275
- JP-A- 2005 178 621
- US-A- 4 515 405
- US-A1- 2007 056 790

## Description

### Technical Field

The present invention relates to a motorcycle having a cowl structure including a front cowl that covers the front portion of the body.

### Background Art

Some motorcycles include a front cowl that covers the front portion of the body. Some of the cowls (also referred to as fairings) of this type include an upper cowling that is attached and supported onto the front portion of the body via a cowling stay and supports a headlight or screen, and a side cowling whose front portion is supported on either side of the upper cowling (see, for example, JP Patent No. 3375468).

However, the cowl structure according to the related art is such that the upper cowling and the side cowling are coupled together by smoothly connecting their outer surfaces to each other. Thus, no machining for providing a wind shielding/deflection effect is applied to such a coupling area, and applying such machining often adds complexity to the shape of the side cowling (side cowl) as a whole.

Other motorcycles include a front cowl that covers the front portion of the body. Examples of the cowls (also referred to as fairings) of this type include one which is extended rearward from the front of the body to be located on the lateral side of the body, and a lower portion of the rear half of the cowl is formed to surround the top and rear sides of an engine while leaving the front and lateral sides of the engine exposed (see, for example, JP-A No. S57-55274).

However, according to the cowl structure of the related art, the lower portion of the rear half of the cowl (corresponding to a front side cowl located on the lateral side of the body) is bent so as to surround the top and rear sides of the engine, so the cowl structure becomes complex and large. Further, while some motorcycles are configured to control the body to a specific position for effecting banking toward the inner side in the cornering direction when cornering, it is still often difficult to attain a satisfactory deflection effect to facilitate this banking operation.

Further, the cowl structure according to the related art is still often inadequate in sending travel wind toward the occupant of a motorcycle during travel.

US 2007 056 790 A1 discloses a motorcycle in accordance with the preamble of claim 1.

US 4 515 405 A discloses a motorcycle having a cowl structure comprising a front cowl that covers a front portion of a body, wherein the front cowl includes a front upper cowl that covers the center of the front portion of the body, and a front side cowl attached to a side surface of the front upper cowl and a deflection groove is formed by the front side cowl.

JP 2005 178 621 A shows a cowl structure for a motorcycle comprising a front cowl that covers a front portion of a body wherein the front cowl includes a front upper cowl that covers the center of the front portion of the body, and a front side cowl attached to a side surface of the front upper cowl.

### Problem to be Solved by the Invention

Under a first aspect, the present invention has been made in view of the circumstances described above, and accordingly it is an object of the present invention to provide a motorcycle having a cowl structure that makes it possible to easily attain a wind shielding/deflection effect by using separate cowls together.

Under a second aspect, it is an object of the present invention to provide a motorcycle having a cowl structure which makes it possible to attain a deflection effect that facilitates change of direction by means of a simple shape.

Under a third aspect, it is an object of the present invention to provide a motorcycle having a cowl structure which makes it possible to appropriately direct travel wind from the front of the body toward the occupant and the engine by means of a simple shape.

### Means for Solving the Problem

To address the above-described problem, according to the present invention, under the first aspect, there is provided a motorcycle having a cowl structure in accordance with claim 1.

According to the invention, a deflection groove having a substantially V shape is formed by the front upper cowl and each front side cowl, at the boundary where the front upper cowl and the front side cowls meet. Therefore, a wind shielding/deflection effect can be easily attained by using separate cowls together, without having to machine the side cowl into a complex shape in order to attain the wind shielding/deflection effect.

Since the deflection grooves are formed in a V shape in side view from the vicinity of a front end of the front upper cowl toward the rear, the upper-side portion of the V shape located across the deflection groove can be inclined obliquely, thereby making it possible to effectively attain a wind shielding/deflection effect.

To address the above-described problem, according to the second aspect of the present invention, a slit portion that extends in a longitudinal direction of the body is provided in a side surface of each front side cowl, and an upper front side cowl portion located above each slit portion projects more outward in a vehicle width direction than a lower front side cowl portion located below each slit portion in front view.

Thus, travel wind can be separated away more easily in the cowl's upper side spaced apart from the ground contact point of the wheel that serves as the center of oscillation at the time of banking, thereby making it possible to keep the operating load for effecting banking low by means of a simple shape.

It is preferable that the deflection grooves are formed in a V shape in side view from the vicinity of a front end of the front upper cowl toward the rear. According to this configuration, the upper-side portion of the V shape located across the deflection grooves can be inclined obliquely, thereby making it possible to effectively attain a wind shielding/deflection effect and enhance the comfort for the occupant.

It is preferable that the deflection grooves extend upward toward the rear from the vicinity of the front end of the front upper cowl. According to this configuration, travel air can be guided toward the occupant.

Further, it is preferable that a front blinker is attached to a front portion of each deflection groove. According to this configuration, the quantity of wind flowing to the occupant via the deflection groove can be appropriately reduced.

It is preferable that the front side cowls extend toward the rear in a substantially V shape from a front lower end of the front cowl as vertices, the slit portions extend rearward from the vicinity of the vertices, the upper front side cowl portions extend so as to cover side surfaces of a fuel tank supported above a body frame, and the lower front side cowl portions extend downward toward the rear and cover an upper portion of an engine supported below the fuel tank. According to this configuration, travel wind from the front of the body can be split vertically by means of a simple shape so that its flow is divided between the occupant side and the engine side.

It is preferable that the cowl structure further includes a pair of left and right side covers that cover side portions of the body from below the fuel tank to below a seat in rear of the fuel tank, and that the lower front side cowl portions extend so as to at least partially overlap the side covers. According to this configuration, it is possible to cut off the transmission of exhaust heat of the engine to the occupant more effectively.

It is preferable that a flip portion that is bent outward in a vehicle width direction is provided at a lower end of the lower front side cowl portions. According to this configuration, travel wind flowing downward along the lower front side cowl portions can be separated away from the front side cowl to provide an enhanced deflection effect.

Further, it is preferable that a recessed surface is provided in an upper surface of each upper front side cowl portion. According to this configuration, a part of the travel wind flowing along the upper front side cowl portion can be regulated so as not to flow toward the occupant, thereby making it possible to regulate the quantity of wind directed toward the occupant for enhanced comfort.

Further, it is preferable that a louvered opening is provided in a back surface of each upper front side cowl portion, and that an inner surface of each lower front side cowl portion is shaped so as to guide air sucked in from an air intake duct portion provided at a front lower end of the front side cowls to below the fuel tank. According to this configuration, it is possible to smoothly discharge the air inside the upper front side cowl portion from the louvered opening and guide the air toward the occupant, and also improve the cooling of the engine and shielding of the fuel tank from heat.

Preferably, according to the third aspect of the present invention, a fuel tank is supported above a body frame and an engine is supported below the fuel tank, wherein the front side cowls provided on lateral sides of the front cowl extends toward the rear in a substantially V shape from a front portion of the front cowl as vertices, and each includes the upper front side cowl portion that extends upward toward the rear and covers a side surface of the fuel tank, and the lower front side cowl portion that extends downward toward the rear and covers an upper portion of the engine. According to this configuration, travel wind from the front of the body can be split vertically by means of a simple shape so that its flow is divided between the occupant side and the engine side.

It is preferable that the front side cowls detachably cover lateral sides of the front upper cowl that forms the front cowl and faces to the front of the body. According to this configuration, the front side cowl can be detached to easily perform various maintenance operations.

It is preferable that the front upper cowl includes an air intake duct portion in a lower portion of a headlight opening provided in the front upper cowl, and the front side cowls extend in a substantially V shape toward the rear from a lateral side of the air intake duct portion as vertices. According to this configuration, travel wind can be split vertically at a position as forward of the body as possible to allow a sufficient quantity of wind to flow to the occupant side and the engine side.

It is preferable that the cowl structure further includes a pair of downwardly projecting side covers that cover side portions of the body below the fuel tank and below a seat in rear of the fuel tank, and the lower front side cowl portions extend so as to at least partially overlap the side covers. According to this configuration, it is possible to cut off the transmission of exhaust heat of the engine to the occupant more effectively.

It is preferable that the slit portions that extend in a longitudinal direction of the body are formed by lower side surfaces of the upper front side cowl portions and an upper side surface of the lower front side cowl portions. According to this configuration, the travel wind deflection effect can be enhanced by means of this slit portion.

It is preferable that the lower front side cowl portions have a surface that faces to a side surface of the body and is inclined inwardly of the body toward a lower part of the body. According to this configuration, travel wind flowing along the lower front side cowl portions can be guided toward the engine with reliability.

It is preferable that the upper front side cowl portions have a V shape in cross section that opens inwardly of the body. According to this configuration, the section modulus of the upper front side cowl portion can be increased to achieve enhanced cowl strength.

It is preferable that rear edges of the upper front side cowl portions and lower front side cowl portions are formed in a shape that substantially coincides with or extends along an outline of a recess of knee grip portions provided in the fuel tank. According to this configuration, interference with the occupant's foot can be avoided with reliability to facilitate knee gripping.

### Brief Description of the Drawings

Fig. 1 is a side view of a motorcycle including a cowl structure according to an embodiment of the present invention.
Fig. 2 is a front view of a motorcycle.
Fig. 3 is a front view of the motorcycle with a front side cowl detached.
Fig. 4 is a view of a motorcycle as seen obliquely from above.
Fig. 5 is a side view of a front cowl together with a fuel tank.
Fig. 6(A) is a front view of a front cowl, and Fig. 6(B) is a sectional view of a left-side front side cowl in Fig. 5 taken along a line B-B.
Fig. 7 is an exploded perspective view showing how front side cowls are attached.
Fig. 8 is a view of a front side cowl as seen from the back side.
Fig. 9 is a view of the attached state of a front side cowl as seen from the back side.
Fig. 10 is a perspective view showing a front side cowl on the right side of the body together with the configuration in the vicinity thereof.

### Best Mode for Carrying Out the Invention

Hereinbelow, an embodiment of the present invention will be described with reference to the accompanying drawings. It should be noted that in the following description, directions such as upper and lower, front and rear, and left and right are formed with reference to the vehicle body.

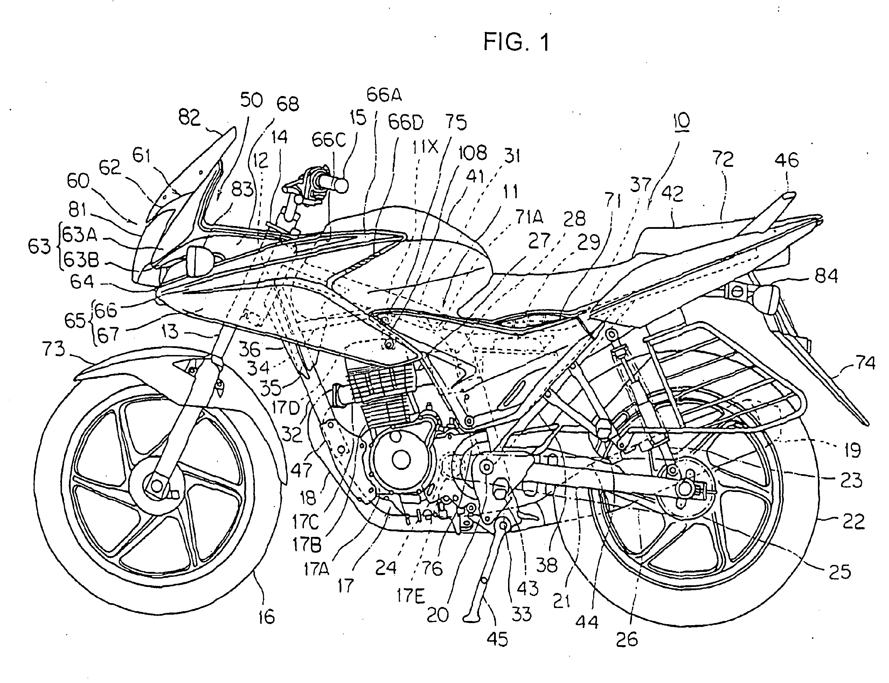

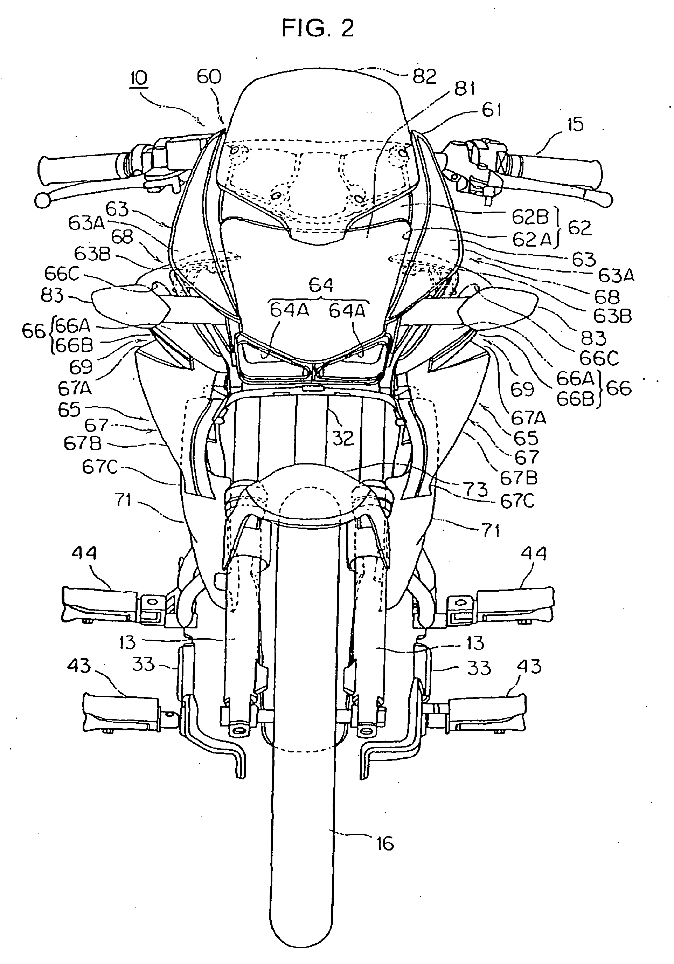

Fig. 1 is a side view of a motorcycle including a cowl structure according to the embodiment of the present invention, and Fig. 2 is a front view thereof.

As shown in Fig. 1, a motorcycle 10 includes a body frame 11, a pair of left and right front forks 13, 13 rotatably supported on a head pipe 12 attached to a front end portion of the body frame 11, a steering handlebar 15 attached to a top bridge 14 that supports an upper end portion of the front forks 13, 13, a front wheel 16 rotatably supported on the front fork 13, an engine 17 supported on the body frame 11, an exhaust muffler 19 coupled to the engine 17 via an exhaust pipe 18, a rear swing arm 21 that is supported on a pivot 20 in a lower rear portion of the body frame 11 so as to be vertically swingable, and a rear wheel 22 rotatably supported on a rear end portion of the rear swing arm 21. A rear cushion 23 is arranged between the rear swing arm 21 and the body frame 11.

The body frame 11 includes a main frame 31 that first extends rearward from the head pipe 12 and is then bent so as to extend obliquely downward toward the rear, a down tube 32 that extends below the main frame 31 obliquely downward toward the rear from the head pipe 12, and a pivot plate 33 having the pivot 20 coupled to a rear portion of the main frame 31 and supporting the rear swing arm 21. In the vicinity of the head pipe 12, a tension pipe 34 is suspended between the main frame 31 and the down tube 32, and there are provided a first reinforcing plate 35 that couples the head pipe 12, the main frame 31, and the down tube 32 together, and a second reinforcing plate 36 that couples the head pipe 12 and the down tube 32 together. These components ensure sufficient rigidity of the front portion of the body frame 11.

A seat rail 37 is coupled to the vicinity of the bent portion of the main frame 31. The seat rail 37 is also supported on a stay 38 coupled to the pivot plate 33. A fuel tank 41 is supported on the main frame 31 in front of the seat rail 37. A seat 42 on which an occupant sits is supported in rear of the fuel tank 41, that is, on the seat rail 37. It should be noted that in Figs. 1 and 2, reference numerals 43, 43 denote rider steps which are provided to the pivot plate 33 and on which a rider sitting on a front portion of the seat 42 places his/her feet. Reference numerals 44, 44 denote pillion passenger steps which are provided in a foldable manner to the stay 38 supporting the seat rail 37 and on which a pillion passenger sitting on a rear portion of the seat 42 places his/her feet. Further, reference numeral 45 denotes a side stand (see Fig. 1), and reference numeral 46 denotes a grab rail (see Fig. 1) that is grabbed by the pillion passenger.

The engine 17 is supported inside a space surrounded by the main frame 31 and the down tube 32, and is thus supported at a position near the front of the body and below the fuel tank 41. More specifically, the engine 17 is supported on the down tube 32 via an engine mount 47, and includes a crankcase 17A supported on the pivot plate 33 provided to the main frame 31, a cylinder block 17B coupled above the front portion of the crankcase 17A, a cylinder head 17C coupled to an upper portion of the cylinder block 17B, and a head cover 17C coupled to an upper portion of the cylinder head 17C.

The engine 17 is an air-cooled single-cylinder engine, and air-cooling fins are provided around the periphery of the cylinder block 17B and the cylinder head 17C. Also, employed as the engine 17 is a vertically mounted engine with the cylinder block 17B arranged substantially perpendicularly (in actuality, slightly tilted forward) with respect to the crankcase 17A.

In the cylinder block 17B, a piston is accommodated within a cylinder so as to be capable of reciprocating movement. A crankshaft coupled to the piston via a connecting rod and an output shaft 17E of the engine 17 are journalled to the cylinder case 17A, and a clutch mechanism, transmission mechanism, or the like constituting a power transmitting mechanism between the crankshaft and the output shaft 17E are accommodated in the cylinder case 17A. As shown in Fig. 1, sprockets 24, 25 are provided to the output shaft 17E and the rear wheel 22, respectively. The power of the engine 17 is transmitted to the rear wheel 22 via a drive chain 26 wound around the sprockets 24, 25.

The exhaust pipe 18 is connected to the front surface of the cylinder head 17C, and a carburetor 28 is coupled to the back surface of the cylinder head 17C via an insulator 27. An air cleaner 29 is connected in rear of the carburetor 28. Fuel is supplied to the carburetor 28 from within the fuel tank 41, and the fuel is mixed with air from the air cleaner 29 before being supplied to the engine 17. It should be noted that not only the carburetor system but also an injector system may be employed.

The motorcycle 10 is provided with a body cover 50 that covers the body. The body cover 50 includes a front cowl 60 that covers a front portion of the body, a pair of left and right side covers 71, 71 that cover side portions of the body, and a rear seat cowl 72 that covers a rear portion of the body. These components are each formed from a suitable material such as synthetic resin. Further, a front fender 73 that covers the front wheel 16 is attached to the front fork 13, and a rear fender 74 that covers the rear wheel 22 is attached to the rear seat cowl 72.

The side cover 71 is formed as a large-sized cover having a substantially triangle shape that protrudes downward so as to cover a side portion of the body from below the fuel tank 41 to below the seat 42, and a grommet 71A is provided at a position spaced apart from the front end. The grommet 71A is held below the fuel tank 41 by the body frame 11 (the main frame 31), and the front end and the lower end are fixed to the body frame 11 (the main frame 31) with screws 75, 76. Thus, the side cover 71 covers the gap between the main frame 31, the seat rail 37, and the stay 38, and prevents various parts (the carburetor 28 and the air cleaner 29 described above) arranged in rear of the engine 17 from being exposed to the exterior, thus providing an enhanced exterior appearance. In addition, the substantially flat surface of the side cover 71 allows travel wind flowing along the side portion of the body to flow smoothly to the rear of the body, thereby reducing air resistance.

Further, the rear seat cowl 72 is fixed to the seat rail 37 and extends rearward in the manner of a smooth curved surface so as to be extended upward toward the rear on the left and right of the seat 42 from the vicinity of the rear edge of the side cover 71. It is thus possible to provide an enhanced exterior appearance, and also allow travel wind from the front of the body to smoothly flow to the rear along the rear seat cowl 72 to achieve a reduction in air resistance.

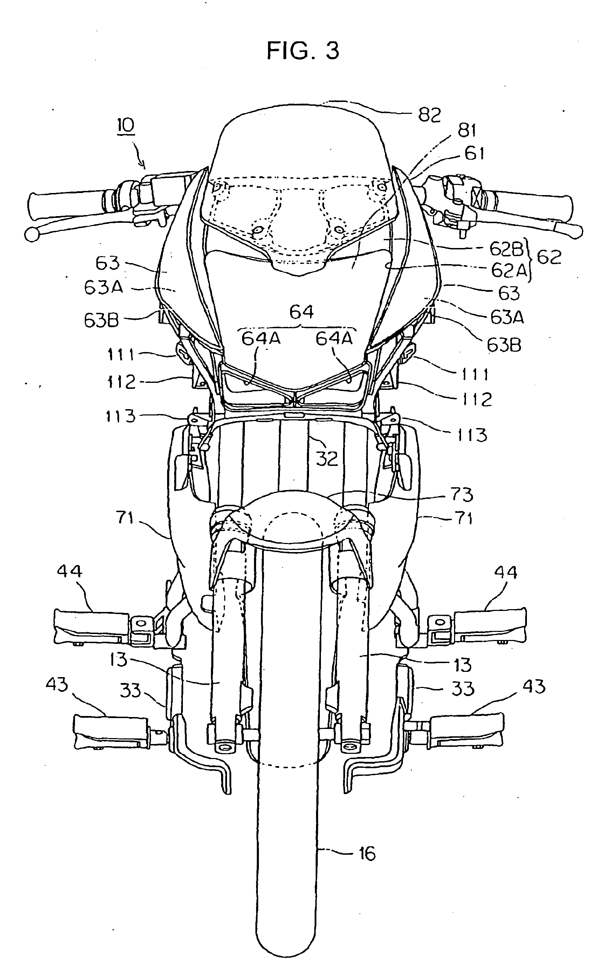

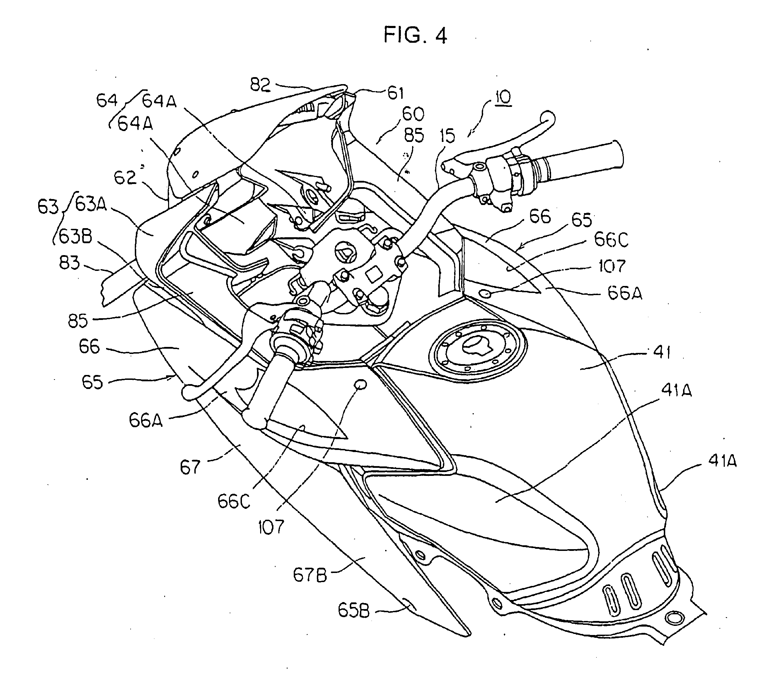

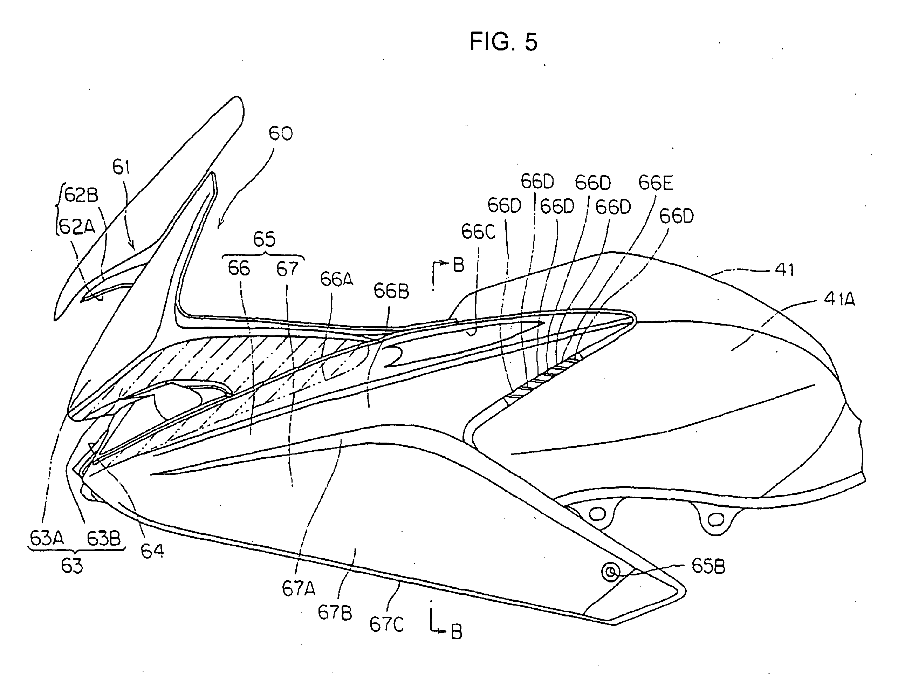

Next, the front cowl 60 will be described in detail. The front cowl 60 includes a front upper cowl 61 that covers the center of the front portion of the body, and a pair of left and right front side cowls 65 that are detachably provided on the lateral sides of the front upper cowl 61 and cover the lateral sides of the front portion of the body. Here, Fig. 3 is a front view of the motorcycle 10 with the front side cowl 65 detached, Fig. 4 is a view of the motorcycle 10 as seen obliquely from above, and Fig. 5 is a side view showing the front cowl 60 together with the fuel tank 41.

The front upper cowl 61 is fixed to the body frame 11 via a cowl stay (not shown), at a position in front of the head pipe 12. As shown in Fig. 3, a headlight 81 and a screen 82 are arranged in the front upper cowl 61.

More specifically, as shown in Figs. 1 to 3, the front upper cowl 61 is formed so as to integrally include a nose portion 62 that is curved obliquely rearward from the front end, nose side portions 63, 63 that project to the left and right of the nose portion 62, and an air intake duct portion 64 provided below the nose portion 62.

The nose portion 62 has a headlight opening 62A (see Fig. 2) for accommodating the headlight 81, and a meter visor portion 62B (see Fig. 2) provided above the headlight opening 62A to shield meters accommodated in rear of the front upper cowl 61 from light. The screen 82 is attached to the front surface of the meter visor portion 62B (see Fig. 2).

As shown in Figs. 3 and 5, the nose side portions 63, 63 are formed so as to be bilaterally symmetrical. As seen in side view, the nose side portions 63, 63 are each shaped like a cover that extends toward the rear in a substantially V shape from a lateral side of the front lower end of the nose portion 62 as the vertex. As seen from the front of the body (see Fig. 3), the nose side portions 63, 63 have a substantially V shape in cross section that is inwardly open, and branch out to upper and lower parts on the rear side. As shown in Fig. 5, an upper side surface 63A of the nose side portion 63 having a substantially V-shaped cross section extends upward toward the rear at a relatively steep inclination along the nose portion 62. A lower side surface 63B of the nose side portion 63 extends upward toward the rear at an inclination that is more gentle than that of the upper side surface 63A. As shown in Fig. 1, the lower side surface 63B branches out at a position below the handlebar 15 from the upper side surface 63A and its upper edge extends substantially horizontally toward the rear, thereby avoiding interference with the handlebar 15.

In this way, the upper side surface 63A of the nose side portion 63 is inclined along the nose portion 62, and is formed as an inclined surface that is inclined downward to the outer side of the body as seen in the front view of the body. Thus, the nose portion 62 and the screen 82 are substantially integrated with each other to direct travel wind coming from the front of the body to smoothly slow obliquely upward. In addition, travel wind is directed to smoothly flow to the left and right of the body while reducing the front projection area, thereby reducing air resistance and also reducing the amount of wind directly hitting the occupant sitting on the seat 42 to attain a wind shielding effect and deflection effect.

Further, as shown in Fig. 5, the lower side surface 63B of the nose side portion 63 extends upward toward the rear at a gentle inclination, thus making it possible to direct travel wind from the front of the body to smoothly flow toward the upper body of the occupant sitting on the seat 42. In this connection, according to the present configuration, as shown in Figs. 1 and 2, a pair of left and right front blinkers 83, 83 are attached on the front side of the lower side surface 63B of the nose side portion 63. Accordingly, the quantity of travel wind flowing toward the occupant (travel wind flowing toward the occupant along the lower side surface 63B) is reduced appropriately by means of the front blinkers 83, 83. It should be noted that rear blinkers 84, 84 (see Fig. 1) are attached to the base portion of the rear fender 74.

As shown in Fig. 3, the air intake duct portion 64 is located at the front lower end of the front upper cowl 61, includes a pair of left and right ducts 64A, 64A that open toward the front, and introduces travel wind from the front of the body into a space between the pair of left and right front side cowls 65, 65.

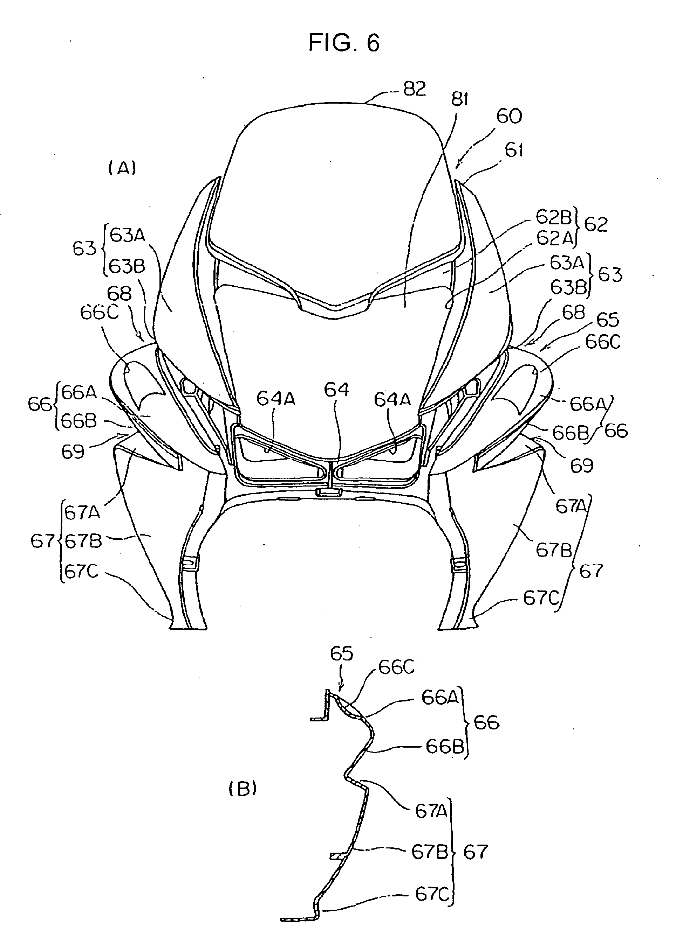

Next, the front side cowls 65, 65 will be described. Fig. 6(A) is a front view of the front cowl 60, and Fig. 6(B) is a sectional view of the left front side cowl 65 taken along the line B-B in Fig. 5. As shown in Fig. 6(A), the front side cowls 65, 65 are formed bilaterally symmetrical. In the following, a detailed description will be given of the front side cowl 65 on one side (on the left side of the body).

As shown in Fig. 5, the front side cowl 65 is formed in the shape of a cover that extends toward the rear in a substantially V shape from a lateral side of the air intake duct portion 64 (that is, the front lower end of the front cowl 60) as the vertex. The front side cowl 65 is formed as an integral cover including an upper front side cowl portion 66 that extends upward toward the rear, and a lower front side cowl portion 67 that extends downward toward the rear.

The upper front side cowl portion 66 and the lower front side cowl portion 67 are formed in a curved shape so as to gradually project outward in the vehicle width direction as they extend toward the rear from the above-mentioned vertex, and branch out vertically on the lateral side of the front portion of the fuel tank 41 and then extend rearward. The rear edges of the cowl portions 66, 67 are formed in the shape of a substantially V-shaped slit in side view so as to substantially coincide with the outline of the recess of a knee grip portion 41A provided in the fuel tank 41.

More specifically, the upper front side cowl portion 66 extends rearward along the lateral side of the fuel tank 41 from the lateral side of the front end of the air intake duct portion 64 so as to cover an area from the front end of the front cowl 60 to the lateral side of the fuel tank 41. Also, the upper front side cowl portion 66 is curved inward in the vehicle width direction on the lateral side of the fuel tank 41 so as to extent smoothly continuous to the side surface of the fuel tank 41 (see Fig. 4).

As shown in Fig. 6(B), as seen in the front view of the body, the upper front side cowl portion 66 is formed in a substantially V shape in cross section that opens inward and includes an upper inclined surface (upper side surface) 66A that is inclined outward in the vehicle width direction toward a lower part of the body, and a lower inclined surface (lower side surface) 66B that is inclined inward in the vehicle width direction toward a lower part of the body.

As shown in Fig. 5, the upper inclined surface 66A is formed as a surface that extends upward toward the rear toward the occupant sitting on the seat 42. Thus, the upper inclined surface 66A can serve as an air guide surface for guiding travel wind coming from the front of the body toward the occupant, particularly toward the upper-body side of the occupant.

As shown in Fig. 6(A), a deflection groove 68, which is V shaped in side view and extends in the longitudinal direction of the body, is formed by the upper inclined surface 66A and the lower side surface 63B of the nose side portion 63, at the boundary where the front upper cowl 61 and the front side cowl 65 meet. Thus, travel wind from the front of the body can be deflected by means of the deflection groove 68 to smoothly flow toward the rear of the body. The area of the deflection groove 68 as seen in a side view of the body is indicated by a two-dot chain line in Fig. 5.

Further, a recessed surface 66C that is recessed in a substantially spherical shape is provided in a rear portion of the upper surface (corresponding to the upper inclined surface 66A) of the upper front side cowl portion 66. Thus, the direction of a part of the travel wind flowing through the deflection groove 68 can be changed upward by the recessed surface 66C, thus making it possible to direct a part of the travel wind flowing through the deflection groove 68 to flow toward the upper side of the upper body of the occupant (such as the shoulder portion) or not to flow toward the occupant. Thus, rather than directing travel wind to flow toward the occupant in a spot-like manner, travel wind can be directed over a larger vertical range to ensure that an appropriate quantity of travel wind flows toward the occupant. That is, according to the present configuration, the quantity and range of the travel wind directed toward the occupant can be regulated by means of the front blinkers 83, 83 arranged upstream of the deflection groove 68, and the recessed surface 66C arranged downstream of the deflection groove 68.

In the back surface of the lower inclined surface 66B of the upper front side cowl portion 66, there is provided an opening (louvered opening) 66E with louvers 66D arranged at a vertical spacing from each other. Thus, travel wind from the front of the body which has passed the air intake duct portion 64 passes through the interior of the upper front side cowl portion 66 and blows out to the rear from the opening 66E. Since an occupant sitting on the seat 42 is positioned in rear of the opening 66E, travel wind can be directed toward this occupant, particularly toward the feet of the occupant. Further, due to the louvers 66D thus arranged, the direction of the wind blowing out from the opening 66E can be set appropriately.

As shown in Fig. 1, the lower front side cowl portion 67 extends rearward from the lateral side of the front end of the air intake duct portion 64 so as to cover the lateral side of the space between the fuel tank 41 and the engine 17, and covers the lateral side of an upper portion (the head cover 17D) of the engine 17, with the rear end of the lower front side cowl portion 67 overlapping the side cover 71.

As shown in Fig. 6(B), the lower front side cowl portion 67 includes an upper inclined surface (upper side surface) 67A that is inclined outward in the vehicle width direction toward a lower part of the body, a lower inclined surface (lower side surface) 67B that faces to the side surface of the body and is inclined inward in the vehicle width direction toward a lower part of the body, and a flip portion 67C that is bent outward in the vehicle width direction from the lower end of the lower inclined surface 67B.

As shown in Fig. 5, the upper inclined surface 67A extends in the longitudinal direction of the body, and the upper inclined surface 67A and the lower inclined surface 66B of the upper front side cowl portion 66 define a slit portion 69 (see Fig. 6(A)) that extends in the longitudinal direction of the body. By means of the slit portion 69, travel wind from the front of the body can be deflected to the longitudinal direction of the body so as to flow rearward. Further, the slit portion 69 separates the travel wind introduced from the air intake duct portion 64 into the front side cowl 65, into flows of air directed toward the upper front side cowl portion 66 and toward the lower front side cowl portion 67 so that air on the upper side is smoothly discharged from the opening (louvered opening) 66E via the space between the fuel tank 41 and the upper front side cowl portion 66, and air on the lower side is guided to below the fuel tank 41, thereby improving the cooling of the engine 17 and also effectively cutting off transmission of the heat of the engine 17 to the fuel tank 41.

Since the lower inclined surface 67B is inclined inwardly of the body toward a lower part of the body, travel wind from the front of the body can be guided toward a lower part of the body and inwardly of the body and sent to the engine 17. This allows a sufficient quantity of travel wind to flow to the cooling fins of the engine 17 for enhanced cooling effect. In addition, since travel wind that has absorbed exhaust heat from the engine 17 flows in a lower part of the body, it is possible to prevent the heat of the engine from being transmitted to the occupant. Further, although exhaust heat of the engine 17 is transmitted to the travel wind passing between the front side cowls 65, 65 as well, since the front side cowl 65 and the side cover 71 are arranged so as to overlap each other, the flow of this travel wind toward the occupant is cut off, thereby making it possible to provide effective heat shielding between the engine 17 and the occupant.

Since the flip portion 67C is provided at the lower end of the front side cowl 65, travel wind that flows downward along the front side cowl 65 can be separated away from the front side cowl 65 at the flip portion 67C, thereby achieving enhanced deflection effect.

Further, as shown in Figs. 6(A) and 6(B), the front side cowl 65 according to the present configuration is formed in such a way that the amount of projection of the lower front side cowl portion 67 in the vehicle width direction is larger than the amount of projection of the upper front side cowl portion 66. That is, the inclination at which the upper front side cowl portion 66 projects in the vehicle width direction from the front toward the rear of the body is set larger than that of the lower front side cowl portion 67.

As thins inclination becomes larger, the travel wind flowing along the cowl portions 66, 67 that cover the lateral side of the body can be more easily separated away on the rear side. Thus, travel wind can be more easily separated away in the upper front side cowl portion 66 than in the lower front side cowl portion 67.

If travel wind is separated away in the cowl portions 66, 67 covering the lateral side of the body in this way, this facilitates banking in the case of the motorcycle 10 that controls the body to a specific position for effecting banking toward the inner side in the cornering direction when cornering. In particular, since the present configuration adopts a cowl shape that makes separation of travel wind easier in the cowl's upper side spaced apart from the ground contact point of the wheel (the front wheel 16 or the rear wheel 22) that serves as the center of oscillation at the time of banking, the moment from the ground contact point of the wheel at the time of banking operation is reduced, thereby making it possible to keep the operating load for effecting banking low.

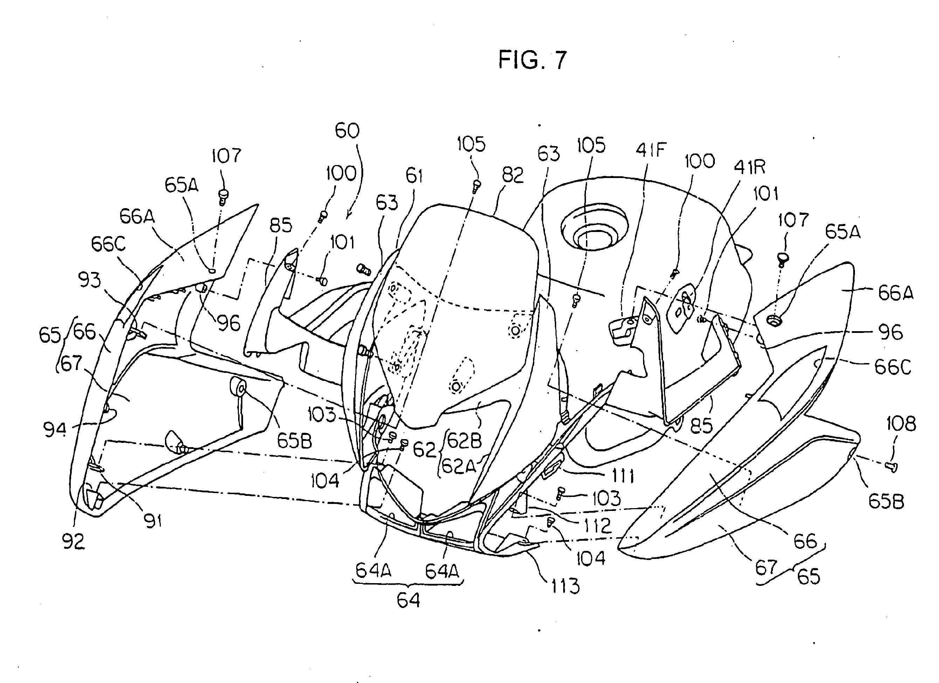

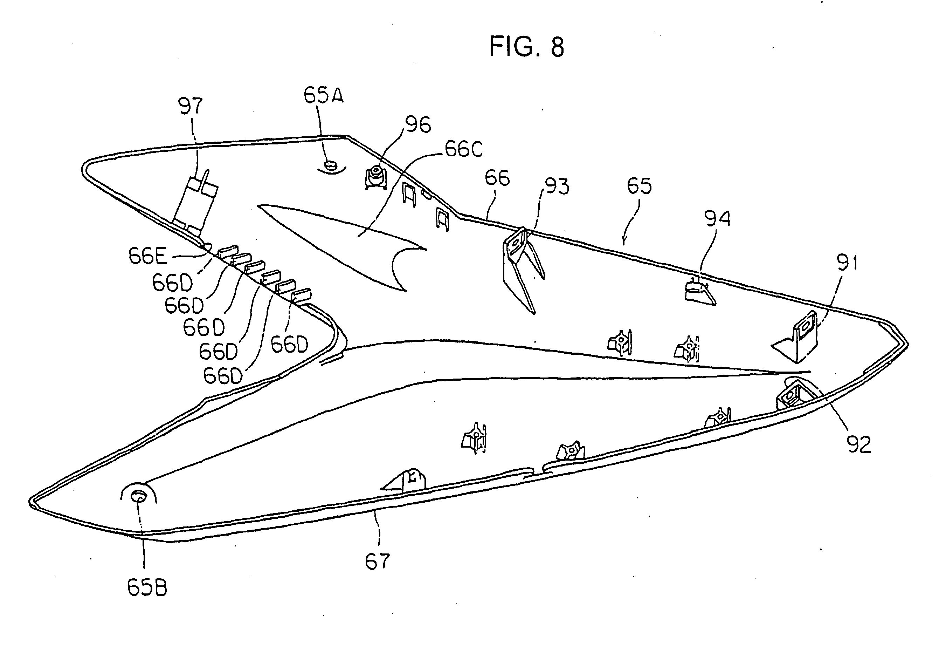

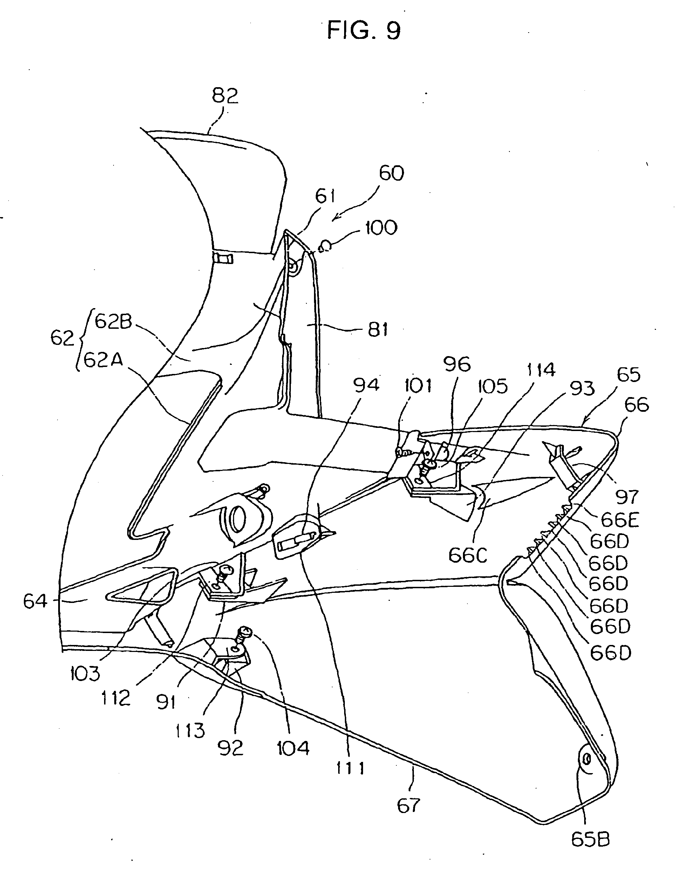

Fig. 7 is an exploded perspective view showing how the front side cowls 65, 65 are attached. Fig. 8 is a view of the front side cowl 65 as seen from the back side. Fig. 9 is a view of the attached state of the front side cowl as seen from the back side.

As described above, the front side cowl 65 has the shape of a longitudinally elongated cowl that covers an area from the front portion of the front upper cowl 61 to the lateral side of the fuel tank 41. As shown in Fig. 7, the front side of the front side cowl 65 is fixed to the front upper cowl 61 side, and the rear side thereof is fixed to the fuel tank 41. It should be noted that in Fig. 7, reference numerals 85, 85 denote inner covers that covers the back surfaces of the nose side portions 63, 63 of the front upper cowl 61. The inner covers 85, 85 are fixed to the nose side portions 63, 63 with screws 100, 100, and are also fixed to the front side cowl 65 with screws 101, 101 (see Fig. 9).

As shown in Fig. 8, in the front side cowl 65, screw fastening portions 91, 92, and 93 that extend inwardly of the body are provided at upper and lower front portions, and at the intermediate portion, and also a protrusion 94 to be hooked onto the front upper cowl 61 is provided between the screw fastening portion 91 at the front portion and the screw fastening portion 93 at the intermediate portion. As shown in Figs. 7 and 9, the protrusion 94 is inserted in the opening of a hooking portion 111 provided in the front upper cowl 61 so as to be capable of sliding back and forth. With the protrusion 94 in this inserted state, when the front side cowl 65 is moved rearward, the protrusion 94 is locked in the hooking portion 111 as shown in Fig. 9. Then, in this state, when screw insertion portions 112, 113, 114 provided at upper and lower front portions of the front upper cowl 61 are attached to the three screw fastening portions 91 to 93 of the front side cowl 65 from inside the body with screws 103, 104, 105, the front side cowl 65 is fixed to the front upper cowl 61.

As shown in Fig. 7, on the left and right of the fuel tank 41, there are provided a screw fastening portion 41 F having a screw hole that extends in the vertical direction of the body, and a bent portion 41 R that is bent in an L shape toward the front side of the body. The screw fastening portion 41 F and the bent portion 41 R each serve as a cowl supporting member for supporting the front side cowl 65.

On the other hand, a screw insertion portion 65A, which communicates with the screw hole of the screw fastening portion 41 F in an upper portion of the fuel tank 41, is provided in the upper inclined surface (upper side surface) 66A of the front side cowl 65, and a screw insertion portion 65B is provided also in the lower inclined surface (lower side surface) 67B of the front side cowl 65. Further, on the inner side of the front side cowl 65, there is provided a screw fastening portion 96 onto which the screw 101 for fixing the inner cover 85 in place is fastened.

As shown in Fig. 8, on the inner side at a rear portion of the front side cowl 65, there is provided a hooking portion 97 that can be hooked to the bent portion 41 R provided in the fuel tank 41. Upon sliding the front side cowl 65 to the rear of the body in a state in which the protrusion 94 at the front of the front side cowl 65 is inserted into the front upper cowl 61, the distal end of the bent portion 41 R enters the hooking portion 97 to be hooked therein, thereby making it possible to lock the front side cowl 65 onto the fuel tank 41.

Then, a screw 107 is inserted through the above-described screw insertion portion 65A provided in an upper portion of the front side cowl 65 from the outside of the body, and is fastened onto the screw fastening portion 41 F of the fuel tank 41, thereby fixing the front side cowl 65 to the fuel tank 41.

Further, as shown in Fig. 1, the screw insertion portion 65B formed in a lower rear portion of the front side cowl 65 communicates with a screw fastening portion 11 X provided in the body frame 11, and the front side cowl 65 is fixed also to the body frame 11 by means of a screw 108 (see Fig. 7). In this way, the front side cowl 65 is fixed to the front upper cowl 61, the fuel tank 41, and the body frame 11, thereby securing sufficient support rigidity of the front side cowl 65.

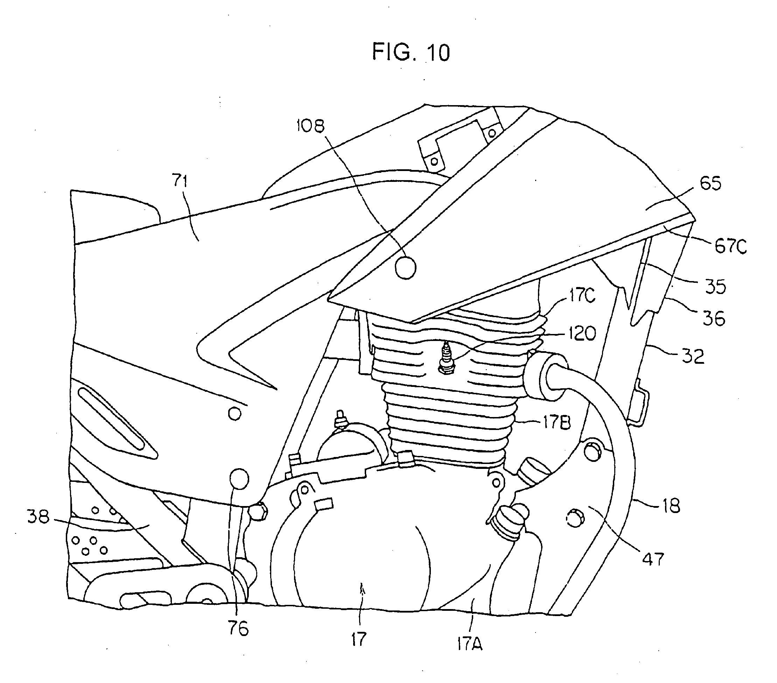

Fig. 10 is a perspective view showing the front side cowl 65 on the right side of the body together with the configuration in the vicinity thereof. As shown in this drawing, the front side cowl 65 covers only an upper portion (the head cover 17D) of the engine 17 and thus does not cover an ignition plug 120 that is inserted and fixed to the cylinder head 17C of the engine 17 from the lateral side, thus allowing easy attaching and detaching of the ignition plug 120 without removing the front side cowl 65.

As described in the foregoing, according to this embodiment, the front cowl 60 includes the front upper cowl 61, and the front side cowl 65 attached to the side surface of the front upper cowl 61, and the deflection groove 68 (diagonally shaded area indicated by two-dot chain lines in Fig. 5) in the form of a substantially V-shaped groove is formed at the boundary where the front upper cowl 61 and the front side cowl 65 as separate members meet. Therefore, a wind shielding/deflection effect can be easily attained by using separate cowls together, without having to machine the cowl (side cowl) that covers the lateral side of the body into a complex shape in order to attain the wind shielding/deflection effect.

Further, the deflection groove 68 is formed so as to extend in a V shape in side view from the vicinity of the front end of the front upper cowl 61 toward the rear. Thus, the upper-side portion (the nose side portion 63) of the V shape located across the deflection groove 68 can be inclined obliquely, thereby making it possible to effectively attain a wind shielding/deflection effect and achieve enhanced comfort for the occupant.

Since the deflection groove 68 extends upward toward the rear from the vicinity of the front end of the front upper cowl 61, travel wind can be guided toward the occupant. Also, the provision of the front blinker 83 at the front portion of the deflection groove 68 makes it possible to appropriately reduce the quantity of wind flowing to the occupant.

As described in the foregoing, according to this embodiment, the slit portion 69 that extends in the longitudinal direction of the body is provided in the side surface of the front side cowl 65 on the lateral side of the front cowl 60, and the upper front side portion 66 located above the slit portion 69 projects more outward in the vehicle width direction than the lower front side cowl portion 67 located below the slit portion 69 in front view. Thus, travel wind can be separated away more easily in the cowl's upper side spaced apart from the ground contact point of the wheel (the front wheel 16 or the rear wheel 22) that serves as the center of oscillation at the time of banking, thereby making it possible to keep the operating load for effecting banking low by means of a simple shape.

Further, according to the present configuration, the front side cowl 65 on the lateral side of the front cowl 60 is extended in a substantially V shape toward the rear from the front portion of the front cowl 60 as the vertex, and includes the upper front side cowl portion 66 that extends upward toward the rear and covers the side surface of the fuel tank 41, and the lower front side cowl portion 67 that extends downward toward the rear and covers the upper portion of the engine 17. Thus, travel wind from the front of the body can be split vertically by means of a simple shape so that its flow is divided between the occupant side and the engine 17 side. Therefore, it is possible to send pleasant travel wind to the occupant, and also enhance the cooling effect for the engine 17 and the heat shielding effect.

Moreover, since the upper front side cowl portion 66 and the lower front side cowl portion 67 extend rearward from the front portion of the front cowl 60, travel wind can be split vertically at a position as forward of the body as possible to allow a sufficient quantity of wind to flow to the occupant side and the engine 17 side. Further, since travel wind can be divided between the occupant side and the engine 17 side without making the inclination of the cowl portions 66 and 67 steep, it is possible to avoid an increase in front projection area, thus also avoiding an increase in air resistance.

Since the front side cowl 65 detachably covers the lateral side of the front upper cowl 61, the front side cowl 65 can be detached from the front upper cowl 61 to easily perform various maintenance operations such as attaching and detaching of the fuel tank 41.

Since the lower front side cowl portion 67 extends downward toward the rear so as to overlap at least a part of the side cover 71, it is possible to cut off the transmission of exhaust heat of the engine 17 to the occupant more effectively.

Since the slit portion 69 that extends in the longitudinal direction of the body is formed by the lower inclined surface (lower side surface) 66B of the upper front side cowl portion 66 and the upper inclined surface (upper side surface) 67A of the lower front side cowl portion 67, the travel wind deflection effect can be enhanced by.the slit portion 69.

Since the lower inclined surface (lower side surface) 67B of the lower front side cowl portion 67 is formed as a surface that is inclined inwardly of the body toward a lower part of the body, travel wind flowing along the cowl portion 67 can be guided toward the engine 17 with reliability.

Since the upper front side cowl portion 66 has a V shape in cross section that opens inwardly of the body and also the lower front side cowl portion 67 is formed so as to be bent in cross section, the section moduli of these cowl portions can be increased to achieve enhanced cowl strength.

Since the rear edges of the upper front side cowl portion 66 and lower front side cowl portion 67 are formed in a shape that substantially coincides with the outline of the recess of the knee grip portion 41A provided in the fuel tank 41, interference with the occupant's foot can be avoided with reliability to facilitate knee gripping. It should be noted that the shape of the rear edges of the cowl portions 66, 67 is not limited to a shape that substantially coincides with the outline of the recess of the knee grip portion 41A but may be a shape that partially or entirely extends along the outline of the recess so as to facilitate knee gripping.

According to the present configuration, since the upper front side cowl portion 66 located above the slit portion 69 of the front side cowl 65 projects more outward in the vehicle width direction than the lower front side cowl portion 67 located below the slit portion 69, travel wind can be separated away more easily in the cowl's upper side spaced apart from the ground contact point of the wheel (the front wheel 16 or the rear wheel 22) that serves as the center of oscillation at the time of banking, thereby making it possible to keep the operating load for effecting banking low by means of a simple shape.

Since the flip portion 67C that is bent outward in the vehicle width direction is provided at the lower end of the lower front side cowl portion 67, travel wind flowing downward along the lower front side cowl portion 67 can be separated away from the front side cowl 65 to provide an enhanced deflection effect.

Since the recessed surface 66C is provided in the upper surface of the upper front side cowl portion 66, a part of the travel wind flowing along the cowl portion 66 can be regulated so as not to flow toward the occupant, thereby making it possible to regulate the quantity of wind directed toward the occupant for enhanced comfort.

Further, since the louvered opening 66E is provided in the back surface of the upper front side cowl portion 66, and the air inside the lower front side cowl portion 67 is guided to below the fuel tank 41 by the slit portion 69, it is possible to smoothly discharge the air inside the upper front side cowl portion 66 from the louvered opening 66E and guide the air toward the occupant, and also to improve the cooling of the engine 17 and shielding of the fuel tank 41 from heat by means of air inside the lower front side cowl portion 67.

Further, according to the present configuration, the deflection groove 68 in the form of a substantially V-shaped groove is formed at the boundary where the front upper cowl 61 and the front side cowl 65 as separate members meet. Therefore, a wind shielding/deflection effect can be easily attained by using separate cowls together, without having to machine the cowl (side cowl) that covers the lateral side of the body into a complex shape in order to attain the wind shielding/deflection effect. In this case, the deflection groove 68 is formed so as to extend in a V shape in side view from the vicinity of the front end of the front upper cowl 61 toward the rear. Thus, the upper-side portion (the nose side portion 63) of the V shape located across the deflection groove 68 can be inclined obliquely, thereby making it possible to effectively attain a wind shielding/deflection effect.

Since the deflection groove 68 extends upward toward the rear from the vicinity of the front end of the front upper cowl 61, travel wind can be guided toward the occupant. Also, the provision of the front blinker 83 at the front portion of the deflection groove 68 makes it possible to appropriately reduce the quantity of wind flowing to the occupant.

The invention is directed to provide a motorcycle having a cowl structure which makes it possible to easily attain a wind shielding/deflection effect by using separate cowls together.

A front cowl 60 includes a front upper cowl 61, and a front side cowl 65 attached to a side surface of the front upper cowl 61. A deflection groove 68 having the shape of a substantially V groove is formed at the boundary where the front upper cowl 61 and the front side cowl 65 as separate members meet.

While the present invention has been described above on the basis of an embodiment thereof, the present invention is not limited to this embodiment, and various design modifications are possible as described in the appended claims. For example, while the above-described embodiment is described a case where the front side cowl 65 is formed as an integral part, the present invention is not limited to this, and a plurality of cowl parts may be coupled together to form the front side cowl 65. Further, the present invention is applicable not only to motorcycles incorporating the air-cooled single-cylinder engine 17 but is applicable to a broad range of motorcycles incorporating an air-cooled multicylinder engine or motorcycles incorporating a water-cooled engine.

## Claims

1. A motorcycle (10) having a cowl structure comprising a front cowl (60) that covers a front portion of a body,
wherein: the front cowl (60) includes a front upper cowl (61) that covers the center of the front portion of the body, and a pair of left and right front side cowls (65) attached to lateral sides of the front upper cowl (61); and
a deflection groove (68) having a substantially V shape is formed by the front upper cowl (61) and each front side cowl (65), at a boundary where the front upper cowl (61) and the front side cowls (65) meet,
**characterized in that** a slit portion (69) that extends in a longitudinal direction of the body is provided in a side surface of each front side cowl (65); and
an upper front side cowl portion (66) located above each slit portion (69) projects more outward in a vehicle width direction than a lower front side cowl portion (67) located below each slit portion (69) in front view.

2. The motorcycle according to Claim 1,
wherein the deflection grooves (68) are formed in a V shape in side view from the vicinity of a front end of the front upper cowl (61) toward the rear.

3. The motorcycle according to Claim 2,
wherein the deflection grooves (68) extend upward toward the rear from the vicinity of the front end of the front upper cowl (61).

4. The motorcycle according to any one of Claims 1 to 3,
wherein a front blinker (83) is attached to a front portion of each deflection groove (68).

5. The motorcycle according to any one of claims 1 to 4,
wherein: the front side cowls (65) extend toward the rear in a substantially V shape from a front lower end of the front cowl (60) as vertices;
the slit portions (69) extend rearward from the vicinity of the vertices; the upper front side cowl portions (66) extend so as to cover side surfaces of a fuel tank (41) supported above a body frame; and
the lower front side cowl portions (67) extend downward toward the rear so as to cover an upper portion of an engine supported below the fuel tank (41).

6. The motorcycle according to claim 5, further comprising a pair of left and right side covers (71) that cover side portions of the body from below the fuel tank to below a seat (42) in rear of the fuel tank (41),
wherein the lower front side cowl portions (67) extend so as to at least partially overlap the side covers (71).

7. The motorcycle according to any one of Claims 1 to 6,
wherein a flip portion (67C) that is bent outward in a vehicle width direction is provided at a lower end of the lower front side cowl portions (67).

8. The motorcycle according to any one of Claims 1 to 7,
wherein a recessed surface (66C) is provided in an upper surface of each upper front side cowl portion (66).

9. The motorcycle according to any one of Claims 5 and 6,
wherein: a louvered opening (66E) is provided in a back surface of each upper front side cowl portion (66); and
an inner surface of each lower front side cowl portion (67) is shaped so as to guide air sucked in from an air intake duct portion (64) provided at a front lower end of the front side cowls (65) to below the fuel tank (41).

10. The motorcycle according to any one of claims 1 to 4 and 7 to 8, comprising a fuel tank (41) supported above a body frame (11) and an engine (17) supported below the fuel tank (41),
wherein the front side cowls (65) provided on lateral sides of the front cowl (60) extend toward the rear in a substantially V shape from a front portion of the front cowl (60) as vertices, and each includes the upper front side cowl portion (66) that extends upward toward the rear and covers a side surface of the fuel tank (41), and the lower front side cowl portion (67) that extends downward toward the rear and covers an upper portion of the engine (17).

11. The motorcycle according to Claim 10,
wherein the front side cowls (65) detachably cover lateral sides of the front upper cowl (61) that forms the front cowl (60) and faces to the front of the body.

12. The motorcycle according to Claim 10 or 11,
wherein: the front upper cowl (61) includes an air intake duct portion (64) in a lower portion of a headlight opening (62A) provided in the front upper cowl (61); and
the front side cowls (65) extend in a substantially V shape toward the rear from a lateral side of the air intake duct portion (64) as vertices.

13. The motorcycle according to any one of Claims 10 to 12,
further comprising a pair of left and right downwardly projecting side covers (71) that cover side portions of the body below the fuel tank (41) and below a seat (42) in rear of the fuel tank (41),
wherein the lower front side cowl portions (67) extend so as to at least partially overlap the side covers (71).

14. The motorcycle according to any one of Claims 10 to 13,
wherein the slit portions (69) that extend in a longitudinal direction of the body are formed by lower side surface of the upper front side cowl portions (66) and an upper side surface of the lower front side cowl portions (67).

15. The motorcycle according to any one of Claims 10 to 14,
wherein the lower front side cowl portions (67) have a surface that faces to a side surface of the body and is inclined inwardly of the body toward a lower part of the body.

16. The motorcycle according to any one of Claims 10 to 15,
wherein the upper front side cowl portions (66) have a V shape in cross section that opens inwardly of the body.

17. The motorcycle according to any one of Claims 10 to 16,
wherein rear edges of the upper front side cowl portions (66) and lower front side cowl portions (67) are formed in a shape that substantially coincides with or extends along an outline of a recess of knee grip portions (41A) provided in the fuel tank (41).

## Patentansprüche

1. Kraftrad (10) mit einer Verkleidungsstruktur, die eine Frontverkleidung (60) aufweist, die einen vorderen Abschnitt eines Aufbaus abdeckt, worin: die Frontverkleidung (60) eine vordere obere Verkleidung (61), die die Mitte des vorderen Abschnitts des Aufbaus abdeckt, sowie ein Paar von linken und rechten vorderen Seitenverkleidungen (65), die an Querseiten der vorderen oberen Verkleidung (61) angebracht sind, enthält; und
eine Ablenknut (68) mit angenäherter V-Form durch die vordere obere Verkleidung (61) und jede vordere Seitenverkleidung (65) an einer Grenze, wo die vordere obere Verkleidung (61) und die vorderen Seitenverkleidungen (65) zusammentreffen, ausgebildet ist,
**dadurch gekennzeichnet, dass** ein Schlitzabschnitt (69), der sich in Längsrichtung des Aufbaus erstreckt, in einer Seitenfläche jeder vorderen Seitenverkleidung (65) vorgesehen ist; und
ein oberer vorderer Seitenverkleidungsabschnitt (66), der oberhalb jedes Schlitzabschnitts (69) angeordnet ist, in Vorderansicht weiter auswärts in Fahrzeugbreitenrichtung vorsteht als ein unterer vorderer Seitenverkleidungsabschnitt (67), der unter jedem Schlitzabschnitt (69) angeordnet ist.

2. Das Kraftrad nach Anspruch 1, worin die Ablenknuten (68) von der Nachbarschaft eines Vorderendes der vorderen oberen Verkleidung (61) zur Rückseite hin in Seitenansicht V-förmig ausgebildet sind.

3. Das Kraftrad nach Anspruch 2, worin sich die Ablenknuten von der Nachbarschaft des Vorderendes der vorderen oberen Verkleidung (61) nach oben zur Rückseite hin erstrecken.

4. Das Kraftrad nach einem der Ansprüche 1 bis 3, worin ein vorderer Blinker (83) an einem vorderen Abschnitt jeder Ablenknut (68) angebracht ist.

5. Das Kraftrad nach einem der Ansprüche 1 bis 4, worin:
sich die vorderen Seitenverkleidungen (65) von einem vorderen unteren Ende der Frontverkleidung (60) als Scheitel angenähert V-förmig zur Rückseite erstrecken;
sich die Schlitzabschnitte (69) von der Nachbarschaft der Scheitel nach hinten erstrecken;
sich die oberen vorderen Seitenverkleidungsabschnitte (66) so erstrecken, dass sie Seitenflächen eines über einem Aufbaurahmen getragenen Tanks (41) abdecken; und
sich die unteren vorderen Seitenverkleidungsabschnitte (67) nach unten zur Rückseite hin erstrecken, um einen oberen Abschnitt eines unter dem Kraftstofftank (41) gelagerten Motors abzudecken.

6. Das Kraftrad nach Anspruch 5, das ferner ein Paar von linken und rechten Seitenabdeckungen (71) aufweist, die Seitenabschnitte des Aufbaus von unterhalb des Kraftstofftanks bis unter einen Sitz (42) hinter dem Kraftstofftank (41) abdecken,
worin sich die unteren vorderen Seitenverkleidungsabschnitte (67) so erstrecken, dass sie die Seitenabdeckungen (71) zumindest teilweise überlappen.

7. Das Kraftrad nach einem der Ansprüche 1 bis 6, worin ein Flossenabschnitt (67C), der in Fahrzeugbreitenrichtung auswärts gebogen ist, an einem Unterende der unteren und vorderen Seitenverkleidungsabschnitte (67) vorgesehen ist.

8. Das Kraftrad nach einem der Ansprüche 1 bis 7, worin eine vertiefte Oberfläche (66C) in einer Oberseite jedes oberen vorderen Seitenverteilungsabschnitts (66) vorgesehen ist.

9. Das Kraftrad nach einem der Ansprüche 5 bis 6, worin: eine Jalousie-öffnung (66E) in einer Rückseite jedes oberen vorderen Seitenverkleidungsabschnitts (66) vorgesehen ist; und
eine Innenseite jedes unteren vorderen Seitenverkleidungsabschnitts (67) so gestaltet ist, dass sie von einem an einem vorderen unteren Ende der vorderen Seitenverkleidungen (65) vorgesehenen Lufteinlassführungsabschnitt (64) eingesaugte Luft unter den Kraftstofftank (41) leitet.

10. Das Kraftrad nach einem der Ansprüche 1 bis 4 und 7 bis 8, das einen über einem Aufbaurahmen (11) gelagerten Kraftstofftank (41) und einen unter dem Kraftstofftank (41) gelagerten Motor (17) aufweist, worin die vorderen Seitenverkleidungen (65), die an Querseiten der Frontverkleidung (60) vorgesehen sind, sich von einem vorderen Abschnitt der Frontverkleidung (60) als Scheitel im Wesentlichen V-förmig nach hinten erstrecken, und jede den oberen vorderen Seitenverkleidungsabschnitt (66), der sich aufwärts nach hinten erstreckt und eine Seitenfläche des Kraftstofftanks (41) abdeckt, und den unteren vorderen Seitenverkleidungsabschnitt (67), der sich nach unten zur Rückseite hin erstreckt und einen oberen Abschnitt des Motors (17) abdeckt, enthält.

11. Das Kraftrad nach Anspruch 10, worin die vorderen Seitenverkleidungen (65) Querseiten der vorderen oberen Verkleidung (61), die die Frontverkleidung (60) bildet und zur Vorderseite des Aufbaus weist, abnehmbar abdecken.

12. Das Kraftrad nach Anspruch 10 oder 11, worin die vordere obere Verkleidung (61) in einem unteren Abschnitt einer in der vorderen oberen Verkleidung (61) vorgesehenen Scheinwerferöffnung (62A) einen Lufteinlassführungsabschnitt (64) enthält; und
die vorderen Seitenverkleidungen (65) sich von einer Querseite des Lufteinlassführungsabschnitts (64) als Scheitel im Wesentlichen V-förmig nach hinten erstrecken.

13. Das Kraftrad nach einem der Ansprüche 10 bis 12, das ferner ein Paar von linken und rechten nach unten vorstehenden Seitenabdeckungen (71) aufweist, die Seitenabschnitte des Aufbaus unter den Kraftstofftank (41) und unter einem Sitz (42) hinter dem Kraftstofftank (41) abdecken,
worin sich die unteren vorderen Seitenverkleidungsabschnitte (67) so erstrecken, dass sie die Seitenabdeckungen (71) zumindest teilweise überlappen.

14. Das Kraftrad nach einem der Ansprüche 10 bis 13, worin die Schlitzabschnitte (69), die sich in Längsrichtung des Aufbaus erstrecken, durch die untere Seitenfläche der oberen vorderen Seitenverkleidungsabschnitte (66) und eine obere Seitenfläche der unteren vorderen Seitenverkleidungsabschnitte (67) gebildet sind.

15. Das Kraftrad nach einem der Ansprüche 10 bis 14, worin die unteren vorderen Seitenverkleidungsabschnitte (67) eine Oberfläche haben, die zu einer Seitenfläche des Aufbaus weist und ein einwärts des Aufbaus zu einem unteren Teil des Aufbaus geneigt ist.

16. Das Kraftrad nach einem der Ansprüche 10 bis 15, worin die oberen vorderen Seitenverkleidungsabschnitte (66) im Querschnitt eine V-Form haben, die sich einwärts des Aufbaus öffnet.

17. Das Kraftrad nach einem der Ansprüche 10 bis 16, worin Hinterränder der oberen vorderen Seitenverkleidungsabschnitte (66) und unteren vorderen Seitenverkleidungsabschnitte (67) in einer Form ausgebildet sind, die im Wesentlichen mit einem Umriss einer in dem Kraftstofftank (41) vorgesehenen Vertiefung von Knieschlussabschnitten (41A) zusammenfällt oder sich entlang diesem erstreckt.

## Revendications

1. Motocyclette (10) ayant une structure de carénage comprenant un carénage avant (60) qui couvre une partie avant d'un corps,
dans laquelle : le carénage avant (60) comprend un carénage supérieur avant (61) qui couvre le centre de la partie avant de la carrosserie, et une paire de carénages latéraux avant gauche et droit (65) fixés aux côtés latéraux du carénage supérieur avant (61) ; et
une gorge de déflexion (68) ayant une forme sensiblement en V est formée par le carénage supérieur avant (61) et chaque carénage latéral avant (65) à une limite où le carénage supérieur avant (61) et les carénages latéraux avant (65) se rencontrent, **caractérisée en ce qu'**une partie fendue (69) qui s'étend dans une direction longitudinale de la carrosserie est ménagée dans une surface latérale de chaque carénage latéral avant (65) ; et
une partie de carénage latéral avant supérieur (66) située au dessus de chaque partie fendue (69) se projette davantage vers l'extérieur dans le sens de la largeur du véhicule qu'une partie de carénage latéral avant inférieur (67) située sous chaque partie fendue (69) dans une vue frontale.

2. Motocyclette selon la revendication 1,
dans laquelle les gorges de déflexion (68) sont réalisées en forme de V, dans une vue latérale partant de la proximité d'une extrémité avant du carénage supérieur avant (61) vers l'arrière.

3. Motocyclette selon la revendication 2,
dans laquelle les gorges de déflexion (68) s'étendent vers le haut vers l'arrière depuis la proximité de l'extrémité avant du carénage supérieur avant (61).

4. Motocyclette selon l'une quelconque des revendications 1 à 3,
dans laquelle un clignotant avant (83) est fixé à une partie avant de chaque gorge de déflexion (68).

5. Motocyclette selon l'une quelconque des revendications 1 à 4,
dans laquelle les carénages latéraux avant (65) s'étendent vers l'arrière dans une forme sensiblement en V depuis une extrémité inférieure avant du carénage avant (60) comme sommets ;
les parties fendues (69) s'étendent vers l'arrière depuis la proximité des sommets ;
les parties de carénage latéral avant supérieur (66) s'étendent de façon à couvrir les surfaces latérales d'un réservoir de carburant (41) supporté au dessus d'un châssis de la carrosserie ; et
les parties de carénage latéral avant inférieur (67) s'étendent vers le bas et vers l'arrière, de façon à couvrir une partie supérieure d'un moteur supporté sous le réservoir de carburant (41).

6. Motocyclette selon la revendication 5, comprenant en outre une paire de couvertures latérales gauche et droite (71), qui couvrent des parties latérales de la carrosserie depuis le dessous du réservoir de carburant jusqu'en dessous d'un siège (42) à l'arrière du réservoir de carburant (41),
dans laquelle les parties de carénage latérales avant (67) s'étendent de façon à recouvrir au moins partiellement les couvertures latérales (71).

7. Motocyclette selon l'une quelconque des revendications 1 à 6,
dans laquelle une partie basculante (67C) qui est repliée vers l'extérieur, dans le sens de la largeur d'un véhicule, est aménagée à une extrémité inférieure des parties de carénage latéral avant inférieur (67).

8. Motocyclette selon l'une quelconque des revendications 1 à 7,
dans laquelle une surface creusée (66C) est aménagée dans une surface supérieure de chaque partie de carénage latéral avant supérieur (66).

9. Motocyclette selon l'une quelconque des revendications 5 et 6, dans laquelle : une ouverture à persiennes (66E) est ménagée dans une surface arrière de chaque partie de carénage latéral avant supérieur (66) et
une surface interne de chaque partie de carénage latéral avant inférieur (67) est formée, de façon à guider l'air aspiré depuis une partie de conduit d'admission d'air (64), aménagée à une extrémité inférieure avant des carénages latéraux avant (65), jusqu'en dessous du réservoir de combustible (41).

10. Motocyclette selon l'une quelconque des revendications 1 à 4 et 7 à 8, comprenant un réservoir de carburant (41) supporté au dessus d'un châssis de carrosserie (11) et un moteur (17) supporté sous le réservoir de carburant (41),
dans laquelle les carénages latéraux avant (65) aménagés sur les côtés latéraux du carénage avant (60) s'étendent vers l'arrière dans une forme sensiblement en V, depuis une partie avant du carénage avant (60), comme sommets, et chacun comprend la partie de carénage latéral avant supérieur (66) qui s'étend vers le haut et vers l'arrière et couvre une surface latérale du réservoir de carburant (41) et la partie de carénage latéral avant inférieur (67) qui s'étend vers le bas et vers l'arrière et couvre une partie supérieure du moteur (17).

11. Motocyclette selon la revendication 10,
dans laquelle les carénages latéraux avant (65) couvrent de manière détachable des côtés latéraux du carénage supérieur avant (61), qui forme le carénage avant (60) et fait face à l'avant du châssis.

12. Motocyclette selon la revendication 10 ou 11, dans laquelle le carénage supérieur avant (61) comprend une partie de conduit d'admission d'air (64) dans une partie inférieure d'une ouverture de phare (62A) aménagée dans le carénage supérieur avant (61) ; et
les carénages latéraux avant (65) s'étendent dans une forme sensiblement en V vers l'arrière, depuis un côté latéral de la partie de conduit d'admission d'air (64) comme sommets.

13. Motocyclette selon l'une quelconque des revendications 10 à 12,
comprenant en outre une paire de carénages latéraux gauche et droit se projetant vers le bas (71) qui couvrent des parties latérales de la carrosserie sous le réservoir de carburant (41) et sous un siège (42) à l'arrière du réservoir de carburant (41),
dans lequel les parties de carénage latérales avant inférieures (67) s'étendent de façon à recouvrir au moins partiellement les couvertures latérales (71).

14. Motocyclette selon l'une quelconque des revendications 10 à 13,
dans laquelle les parties fendues (69) qui s'étendent dans une direction longitudinale de la carrosserie sont formées par la surface latérale inférieure des parties de carénage latéral avant supérieur (66) et une surface latérale supérieure des parties de carénage latéral avant inférieur (67).

15. Motocyclette selon l'une quelconque des revendications 10 à 14,
dans laquelle les parties de carénage latéral avant inférieur (67) ont une surface qui fait face à une surface latérale de la carrosserie et est inclinée vers l'intérieur de la carrosserie vers une partie inférieure de ladite carrosserie.

16. Motocyclette selon l'une quelconque des revendications 10 à 15,
dans laquelle les parties de carénage latéral avant supérieur (66) ont une forme en V, en coupe transversale, qui s'ouvre vers l'intérieur du corps.

17. Motocyclette selon l'une quelconque des revendications 10 à 16,
dans laquelle les bords arrière des parties de carénage latéral avant supérieur (66) et des parties de carénage latéral avant inférieur (67) sont réalisés dans une forme qui coïncide sensiblement avec ou s'étend le long du bord d'une cavité de parties de préhension de genou (41A), ménagées dans le réservoir de carburant (41).
